# EUROPEAN PATENT SPECIFICATION

(11) **EP 4 465 133 B1**
(45) Date of publication and mention of the grant of the patent: **30.09.2026**
(21) Application number: 22931022.2
(22) Date of filing: 28.11.2022
(51) Int. Cl.: G03H 1/08, G02F 1/01, G03H 1/00, G03H 1/22

(54) **HOLOGRAM DATA GENERATION SYSTEM AND HOLOGRAM DATA GENERATION METHOD**
SYSTEM ZUR ERZEUGUNG VON HOLOGRAMMDATEN UND VERFAHREN ZUR ERZEUGUNG VON HOLOGRAMMDATEN
SYSTÈME DE GÉNÉRATION DE DONNÉES D'HOLOGRAMME ET PROCÉDÉ DE GÉNÉRATION DE DONNÉES D'HOLOGRAMME

(30) Priority: 10.03.2022 JP 2022036930
(43) Date of publication of application: 20.11.2024
(73) Proprietor: Hamamatsu Photonics K.K., Hamamatsu-shi, Shizuoka 435-8558 (JP); Utsunomiya University, Utsunomiya-shi, Tochigi 321-8505 (JP)
(72) Inventor: KURITA Takashi, Hamamatsu-shi, Shizuoka 435-8558 (JP); TANAKA Hiroshi, Hamamatsu-shi, Shizuoka 435-8558 (JP); TAKIGUCHI Yuu, Hamamatsu-shi, Shizuoka 435-8558 (JP); KAWASHIMA Toshiyuki, Hamamatsu-shi, Shizuoka 435-8558 (JP); TOYODA Haruyoshi, Hamamatsu-shi, Shizuoka 435-8558 (JP); HAYASAKI Yoshio, Utsunomiya-shi, Tochigi 321-8585 (JP); HASEGAWA Satoshi, Utsunomiya-shi, Tochigi 321-8585 (JP)
(74) Representative: Grünecker Patent- und Rechtsanwälte PartG mbB
(86) International application number: PCT/JP2022/043830
(87) International publication number: WO 2023/171050

(56) References cited:
- JP-A- 2001 228 449
- JP-A- 2001 228 449
- JP-A- 2006 119 427
- JP-A- 2021 164 953
- US-A1- 2008 246 849
- US-A1- 2019 219 889
- ZHANG HONGHAO ET AL: "Three-dimensional holographic parallel focusing with feedback control for femtosecond laser processing", OPTICS AND LASERS IN ENGINEERING, ELSEVIER, AMSTERDAM, NL, vol. 151, 26 November 2021 (2021-11-26), XP086941022, ISSN: 0143-8166, [retrieved on 20211126], DOI: 10.1016/J.OPTLASENG.2021.106884

## Description

### Technical Field

The present invention relates to a hologram data generation system and a hologram data generation method for generating hologram data for realizing a hologram used for light modulation in a spatial light modulator.

### Background Art

Conventionally, a spatial light modulator (SLM) that modulates a spatial phase distribution of light and emits it has been used in a laser processing machine or the like. In the spatial light modulator, light modulation is performed by a hologram (see, for example, Patent Literature 1). Zhang et al., "Three-dimensional holographic parallel focusing with feedback control for femtosecond laser processing",OPTICS AND LASERS IN ENGINEERING, ELSEVIER, AMSTERDAM, NL, vol. 151, 26 November 2021 (2021-11-26), as well as US 2019/219889 A1, US 2008/246849 A1 and JP 2001228449A all represent documents useful to understand the invention.

### Citation List

### Patent Literature

Patent Literature 1: WO 2010/024218 A

### Summary of Invention

### Technical Problem

As the hologram in the spatial light modulator, a computer generated hologram (CGH) generated by computer calculation is used. The distribution of emitted light from the hologram can vary depending on an intended use or the like of the spatial light modulator. However, when the hologram is generated by a uniform generation method (for example, a specific algorithm), there is a possibility that the distribution of the emitted light from the hologram may not be appropriate for the intended use or the like.

An embodiment of the present invention has been made in view of the above, and an object thereof is to provide a hologram data generation system and a hologram data generation method capable of making a hologram used in a spatial light modulator appropriate.

### Solution to Problem

In order to achieve the above object, a hologram data generation system according to the present invention is defined in claim 1.

In the hologram data generation system according to the embodiment of the present invention, the hologram data is generated by an appropriate generation method according to the type of the emitted light intensity distribution that is the target of the emitted light from the hologram. Therefore, according to the hologram data generation system according to the embodiment of the present invention, the hologram used in the spatial light modulator can be made appropriate.

The determination means may determine the type of the intensity distribution from the intensity distribution indicated by the target information acquired by the acquisition means, and determine the generation method to be used for generating the hologram data according to the determined type. According to this configuration, the generation method can be appropriately and reliably determined. As a result, the hologram used in the spatial light modulator can be reliably made appropriate.

The type of the intensity distribution may include at least one of a discrete distribution, a distribution in a traveling direction of emitted light, and an annular distribution. According to this configuration, the type of the intensity distribution for determining the generation method can be made appropriate. As a result, the hologram used in the spatial light modulator can be reliably made appropriate.

Meanwhile, the embodiment of the present invention can be described as an invention of a hologram data generation system as described above, and can also be described as an invention of a hologram data generation method as described below. These inventions are substantially the same invention only in different categories, and exhibit similar operations and effects.

That is, a hologram data generation method according to the present invention is defined in claim 4.

### Advantageous Effects of Invention

According to an embodiment of the present invention, a hologram used in a spatial light modulator can be made appropriate.

### Brief Description of Drawings

FIG. 1 is a diagram illustrating a configuration of a hologram data generation system according to an embodiment of the present invention.
FIG. 2 is a diagram illustrating an example of a configuration of a laser processing machine using hologram data generated by the hologram data generation system.
FIG. 3 is a diagram illustrating an example of target information acquired by the hologram data generation system.
FIG. 4 is a diagram schematically illustrating generation of the hologram data in the hologram data generation system.
FIG. 5 is a diagram illustrating an example of the target information acquired by the hologram data generation system.
FIG. 6 is a flowchart illustrating a hologram data generation method which is processing executed in the hologram data generation system according to the embodiment of the present invention.
FIG. 7 is a flowchart illustrating processing of determining a type of intensity distribution.

### Description of Embodiments

Hereinafter, an embodiment of a hologram data generation system and a hologram data generation method according to the present invention will be described in detail with reference to the drawings. Note that identical elements are denoted by identical reference signs in description of drawings, and the redundant descriptions are omitted.

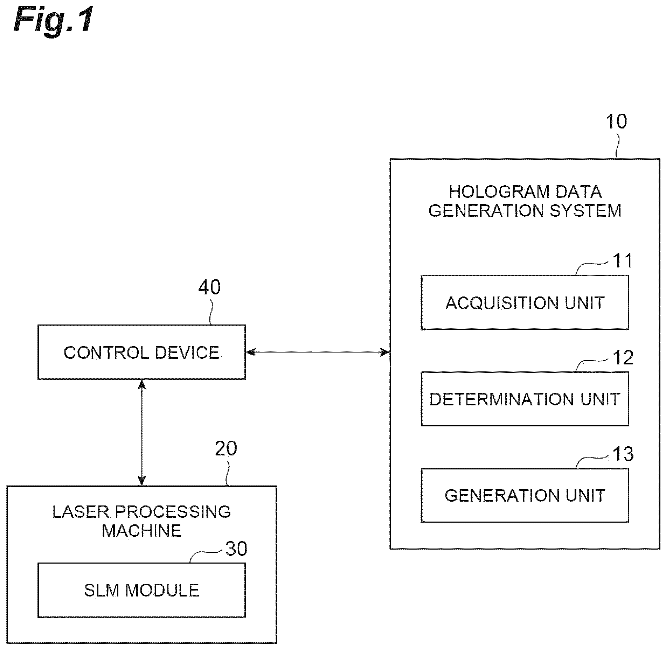

FIG. 1 illustrates a hologram data generation system 10 according to the present embodiment. The hologram data generation system 10 is a system (device) that generates hologram data for realizing a hologram used for light modulation in an SLM (spatial light modulator). The SLM is a device that receives incident light, modulates a spatial phase distribution of the incident light, and emits the modulated light. Hereinafter, it is simply described that light is modulated.

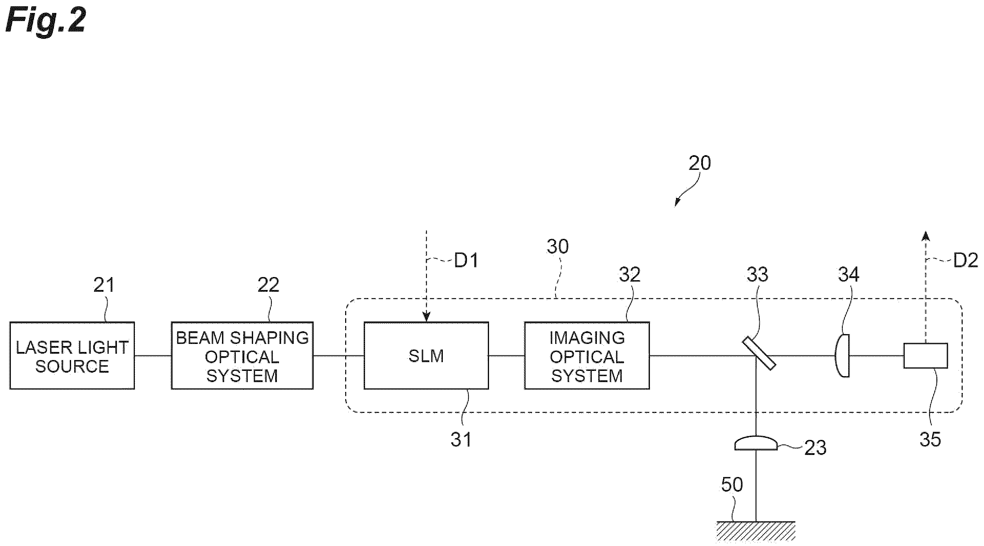

In the present embodiment, the SLM is used in a laser processing machine 20. FIG. 2 schematically illustrates an example of a configuration of the laser processing machine 20. The laser processing machine 20 includes an SLM module 30 including an SLM 31. Note that the SLM 31 is not necessarily used in the laser processing machine 20, and may be used in any application such as a conventionally used application other than laser processing.

The SLM 31 has a plurality of pixel electrodes arranged two-dimensionally, and realizes (generates) a hologram by the pixel electrodes. For example, the SLM 31 realizes a hologram of 1280 × 1024 pixels (SXGA: Super Extended Graphics Array). The SLM 31 transmits or reflects light incident on the hologram to modulate the light. The SLM 31 is, for example, a liquid crystal on silicon (LCOS)-SLM. Note that the SLM 31 may be a conventional SLM that performs light modulation using a hologram.

As the hologram used for light modulation in the SLM 31, CGH is used. The hologram data generation system 10 generates hologram data for realizing the CGH. The SLM 31 inputs the hologram data generated by the hologram data generation system 10 and uses the hologram data to realize a hologram.

The hologram data generation system 10 is realized by, for example, a conventional computer including hardware such as a central processing unit (CPU), a memory, and a communication module. The hologram data generation system 10 may be a computer system including a plurality of computers. Each function to be described later of the hologram data generation system 10 is exhibited by operating these components by a program or the like.

The hologram data generation system 10 is provided by, for example, a service provider that provides hologram data to a user of the SLM 31, that is, a user of the laser processing machine 20. For example, the user has a subscription contract with the service provider and receives provision of hologram data. In this case, the hologram data generation system 10 may be realized by a cloud server.

A control device 40 of the user such as a personal computer (PC) transmits data necessary for generating hologram data to the hologram data generation system 10 via a communication network such as the Internet. The hologram data generation system 10 receives the transmitted data and generates hologram data based on the data. The hologram data generation system 10 transmits the generated hologram data to the control device 40. The control device 40 receives the transmitted hologram data and outputs the hologram data to the SLM 31. Note that the function of the control device 40 may be realized by dedicated client software.

As described above, when the hologram data is generated and provided to the user by the service provider other than the user, the user does not need to generate the hologram data by himself/herself and can easily use the SLM 31. For example, the user does not need to individually prepare software for generating hologram data or learn to generate hologram data. Note that the hologram data generation system 10 does not need to be provided in a framework using a cloud server by the service provider as described above, and may be provided in any framework as long as it has a configuration according to the present embodiment.

Generation of hologram data by the hologram data generation system 10 is performed based on target information indicating an emitted light intensity distribution that is a target of emitted light from a hologram. The hologram data generation system 10 creates appropriate hologram data according to the target information by a function according to the present embodiment to be described later.

Subsequently, an example of the laser processing machine 20 including the SLM 31 will be described. FIG. 2 schematically illustrates a configuration of the laser processing machine 20 according to the present embodiment. As illustrated in FIG. 2, the laser processing machine 20 includes a laser light source 21, a beam shaping optical system 22, a lens 23, and the SLM module 30. Each of the above components is positioned and disposed in an order of the laser light source 21, the beam shaping optical system 22, the SLM module 30, and the lens 23 in an optical path of light used for laser processing.

The laser light source 21 is a light source that outputs light (laser light) input to the SLM module 30 and used for laser processing. The beam shaping optical system 22 is an optical system that shapes and emits light output from the laser light source 21 as a laser beam so as to be suitable for input to the SLM module 30. The SLM module 30 includes the SLM 31, receives the light emitted from the beam shaping optical system 22, modulates the received light, and emits the modulated light. The lens 23 is a lens that allows light emitted from the SLM module 30 and passing through a processing optical path to be incident, to be condensed on a workpiece (object to be processed) 50, and to be incident thereon.

A configuration of the SLM module 30 will be described. As illustrated in FIG. 2, the SLM module 30 includes the SLM 31, an imaging optical system 32, a mirror 33, a lens 34, and a camera 35. The above components are positioned and disposed in an order of the SLM 31, the imaging optical system 32, the mirror 33, the lens 34, and the camera 35 in the optical path of light used for laser processing.

The SLM 31 modulates and outputs the light input to the SLM module 30 via the beam shaping optical system 22. The SLM 31 receives hologram data D1 for realizing CGH from the control device 40 to realize a hologram and uses the hologram for light modulation.

The imaging optical system 32 is an optical system that forms an image of the light output from the SLM 31 on the lens 34 so that laser processing is performed on the workpiece 50. The mirror 33 is an optical system that branches the light output from the imaging optical system 32. One light (for example, light reflected by the mirror 33) branched by the mirror 33 enters the workpiece 50 via the processing optical path and the lens 23.

The other light (for example, light transmitted through mirror 33) branched by the mirror 33 enters the lens 34. The lens 34 is a lens that allows the light branched by the mirror 33 to be incident, to be condensed on the camera 35, and to be incident thereon. The camera 35 is a device that images the light output from the lens 34, that is, the emitted light from the SLM 31. For example, the camera 35 is an imaging element such as a complementary metal oxide semiconductor (CMOS) camera. The image imaged by the camera 35 is an intensity distribution at a condensing position of the emitted light from the SLM 31.

Data D2 of the image of the emitted light from the SLM 31 imaged by the camera 35 is input to the control device 40. The data D2 is used for correction of hologram data used in the SLM 31.

Each component of the laser processing machine 20 may be similar to that of a conventional laser processing machine using an SLM. Note that the laser processing machine 20 does not necessarily have the above-described configuration, and may have a configuration not including any of the above-described components and a configuration including components other than the above-described components.

Next, a function of the hologram data generation system 10 according to the present embodiment will be described. As illustrated in FIG. 1, the hologram data generation system 10 includes an acquisition unit 11, a determination unit 12, and a generation unit 13.

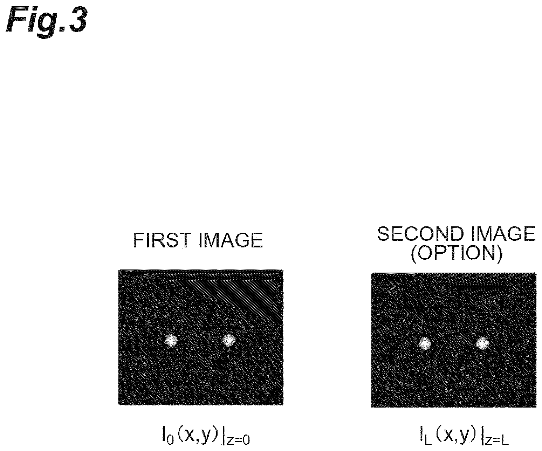

The acquisition unit 11 is acquisition means for acquiring target information indicating an emitted light intensity distribution that is a target of emitted light from a hologram. The target information is, for example, an image indicating an intensity distribution at a condensing position of the emitted light. FIG. 3 illustrates an example of the target information. Specifically, the target information includes information indicating a light intensity I₀(x, y) at a preset position (z = 0) in a light traveling direction (z direction) for each position (x, y) on a plane perpendicular to the direction. This is a first image among images illustrated in FIG. 3. In the present embodiment, the stronger the light intensity, the whiter the color, and the weaker the light intensity, the darker the color. The preset position (z = 0) in the light traveling direction is a position where the emitted light from the SLM 31 is condensed, that is, a processing position of the workpiece 50. The example of the first image illustrated in FIG. 3 indicates that the positions of two points arranged side by side are irradiated with light, and the other positions are not irradiated with light (or are irradiated with extremely weak light).

The target information may include information indicating a light intensity I_{L}(x, y) at a preset position (z = L) different from the above in a light traveling direction (z direction) for each position (x, y) on a plane perpendicular to the direction. This is a second image among the images illustrated in FIG. 3. When the positions where the emitted light from the SLM 31 is condensed extends over a plurality of positions in the light traveling direction, information on the second image may be included. Note that the target information described above is an example, and the target information may be information other than the above as long as the target information is information indicating the emitted light intensity distribution that is the target of the emitted light from the hologram.

The target information corresponds to what type of laser processing is performed on the workpiece 50. Therefore, the user of the laser processing machine 20 generates the target information according to a processing content. The generation of the target information may be performed in the same manner as in the related art.

The target information is transmitted from the control device 40 to the hologram data generation system 10 by the operation of the user of the laser processing machine 20, for example. The acquisition unit 11 receives and acquires the transmitted target information. Note that the acquisition of the target information by the acquisition unit 11 may be performed by a method other than the above. The acquisition unit 11 outputs the acquired target information to the determination unit 12 and the generation unit 13.

The hologram data is generated such that an emitted light intensity distribution becomes an intensity distribution indicated by the target information when the light modulation is performed by the SLM 31 using a hologram realized by the hologram data. The hologram data is generated according to a predetermined generation method, specifically, a predetermined algorithm, based on the target information. However, when the hologram is generated by a uniform generation method, for example, a specific algorithm, there is a possibility that the distribution of the emitted light from the hologram may not be appropriate for the intended use or the like.

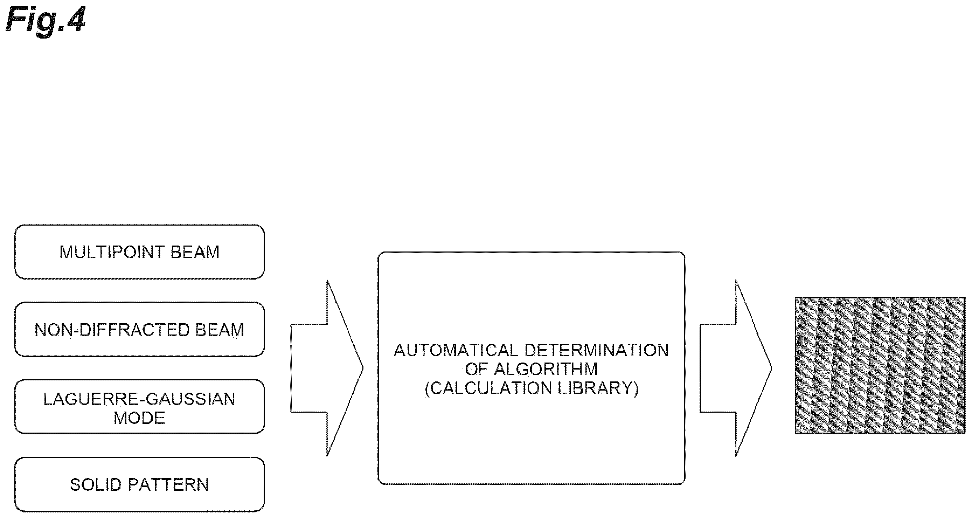

On the other hand, as illustrated in FIG. 4, the hologram data generation system 10 according to the present embodiment automatically determines an algorithm (calculation library) for generating the hologram data according to the type (for example, multipoint beam, non-diffracted beam, Laguerre-Gaussian mode, and solid pattern) of the intensity distribution indicated by the target information, and generates hologram data. By generating the hologram data in this manner, it is possible to make a hologram used for light modulation by the SLM 31 appropriate.

The determination unit 12 is determination means for determining a generation method used for generating the hologram data according to the type of the intensity distribution indicated by the target information acquired by the acquisition unit 11. The determination unit 12 may determine the type of the intensity distribution from the intensity distribution indicated by the target information acquired by the acquisition unit 11, and determine the generation method to be used for generating the hologram data according to the determined type. The type of the intensity distribution may include at least one of a discrete distribution, a distribution in a traveling direction of emitted light, and an annular distribution.

The generation method used to generate the hologram data is an algorithm that outputs the hologram data with the target information as an input. A plurality of algorithms are prepared in advance, and the determination unit 12 determines a generation method to be used for generating hologram data from the plurality of algorithms based on the target information. For example, algorithms is stored in the hologram data generation system 10 in advance as calculation libraries. The calculation libraries may be updated and kept up to date from time to time. Note that the determination unit 12 may determine a generation method other than the above. For example, the determination unit 12 determines a generation method as follows.

The determination unit 12 receives target information from the acquisition unit 11. The determination unit 12 determines a type of the intensity distribution from the intensity distribution indicated by the input target information. The types of the intensity distribution in the present embodiment are a multipoint beam, a non-diffracted beam, a Laguerre-Gaussian mode, and a solid pattern. The determination unit 12 determines which of these four types the intensity distribution corresponds to.

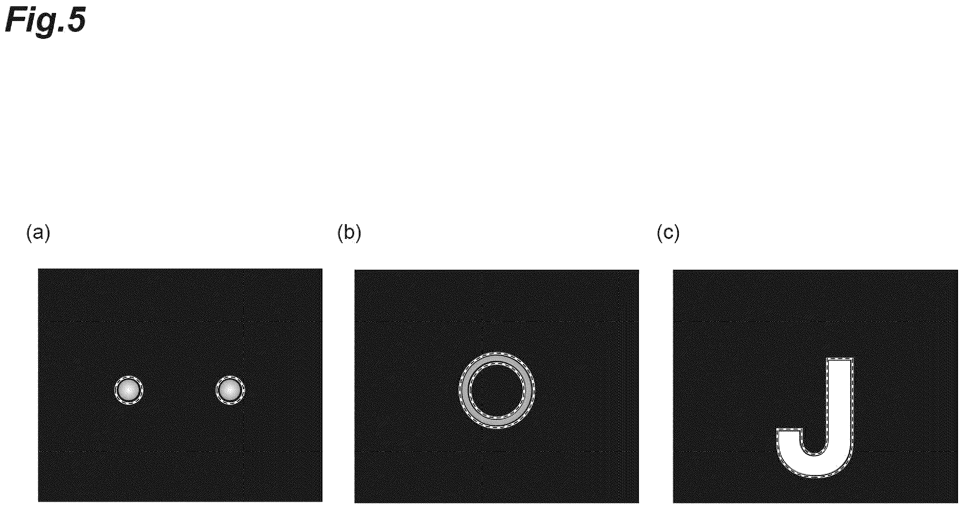

The multipoint beam is a type in which the positions (positions where the intensity is equal to or higher than a certain level, and similarly hereinafter) of the emitted light are a plurality of discontinuous positions in the intensity distribution indicated by the target information, and the intensity distribution of each continuous emitted light is a Gaussian distribution (Gaussian profile). That is, the multipoint beam is a discrete distribution. For example, an intensity distribution illustrated in FIG. 5(a) is a multipoint beam. The non-diffracted beam is a type in which light propagates in the traveling direction in a non-diffracted manner in the intensity distribution indicated by the target information. That is, the non-diffracted beam is a distribution in the traveling direction of the emitted light.

The Laguerre-Gaussian mode is a type in which the positions of the emitted light are an annular (ring-shaped) distribution in the intensity distribution indicated by the target information. For example, an intensity distribution illustrated in FIG. 5(b) is a Laguerre-Gaussian mode. The solid pattern is a type that is not any of the above types. For example, an intensity distribution illustrated in FIG. 5(c) is a solid pattern.

For example, the determination unit 12 determines the type of the intensity distribution as follows. The determination unit 12 binarizes the image (first image) of the intensity distribution at z = 0 with a preset threshold, and detects a contour (for example, a broken line in each intensity distribution in FIG. 5) of the emitted light. The determination unit 12 determines whether there are two or more groups of continuous emitted light indicated by the detected contour. The determination unit 12 determines that the pattern is a branch pattern when the number of groups is 2 or more, and determines that the pattern is not a branch pattern when the number of groups is not 2 or more. For example, it is determined that the intensity distribution illustrated in FIG. 5(a) is a branch pattern, and it is determined that the intensity distributions illustrated in FIGS. 5(b) and 5(c) are not a branch pattern.

In a case where it is determined that the intensity distribution is a branch pattern, the determination unit 12 determines whether the intensity distribution of the group of continuous individual emitted light is a Gaussian profile. In a case where it is determined that the intensity distribution of the group of the continuous individual emitted light is a Gaussian profile, the determination unit 12 determines that the type of the intensity distribution indicated by the target information is a multipoint beam.

When it is determined that the intensity distribution is not a branch pattern, or when it is determined that the intensity distribution of the group of continuous individual emitted light is not a Gaussian profile, subsequently, the determination unit 12 determines whether an image (second image) of the intensity distribution at z = L is included in the target information (that is, whether intensity distribution is at a plurality of positions in the traveling direction of the emitted light). When it is determined that the second image is included, the determination unit 12 determines that the type of the intensity distribution indicated by the target information is a non-diffracted beam.

When it is determined that the second image is not included, the determination unit 12 determines whether the position of the emitted light of the intensity distribution is ring-shaped (whether intensity distribution is a ring pattern). Note that the above determination is performed using, for example, the above described binarized image. When it is determined that the position of the emitted light of the intensity distribution is ring-shaped, the determination unit 12 determines that the type of the intensity distribution indicated by the target information is a Laguerre-Gaussian mode. In a case where it is determined that the position of the emitted light of the intensity distribution is not ring-shaped, the determination unit 12 determines that the type of the intensity distribution indicated by the target information is a solid pattern. Each of the above determinations on the intensity distribution (image) can be made by a conventional image processing technique or the like.

The determination unit 12 stores a type of an intensity distribution and an algorithm used to generate hologram data in association with each other. The algorithm is capable of generating hologram data suitable for a type of a corresponding intensity distribution. The hologram data suitable for the type of the intensity distribution means that an emitted light intensity distribution by a hologram to be realized becomes an intensity distribution indicated by target information more accurately.

For example, the multipoint beam is associated with an algorithm described in Hidetomo Takahashi et al., "Holographic femtosecond laser processing using optimal-rotation-angle method with compensation of spatial frequency response of liquid crystal spatial light modulator", Appl. Opt. 46, 5917-5923 (2007). The non-diffracted beam is associated with an algorithm described in Zhongsheng Zhai et al., "Tunable Axicons Generated by Spatial Light Modulator with High-Level Phase Computer-Generated Holograms", Appl. Sci. 10, 5127 (2020). The Laguerre-Gaussian mode is associated with an algorithm described in Japanese Unexamined Patent Publication No. 2008-134450. The solid pattern is associated with an algorithm described on page 140 and subsequent pages of Fred M. Dickey, Scott C. Holswade, "Laser Beam Shaping Theory And Techniques", CRC Press, (2000).

The determination unit 12 determines (selects) an algorithm associated with the determined type of intensity distribution as an algorithm to be used for generating hologram data. The determination unit 12 notifies the generation unit 13 of the determined algorithm.

Note that the determination of the type of the intensity distribution by the determination unit 12 is not necessarily performed as described above, and may be performed by any method. In addition, the type of the intensity distribution to be determined does not need to be the above, and may be any type that makes the hologram used in the SLM 31 appropriate. In addition, an algorithm other than the above may be used as the algorithm for each type.

The generation unit 13 is generation means for generating hologram data from the target information acquired by the acquisition unit 11 by the generation method determined by the determination unit 12. The generation unit 13 receives target information from the acquisition unit 11. The generation unit 13 receives notification of an algorithm used for generating hologram data from the determination unit 12.

The generation unit 13 reads the algorithm (calculation library) notified from the determination unit 12, and generates hologram data from the target information input from the acquisition unit 11 by the algorithm. As described above, the generation of the hologram data is performed such that the emitted light intensity distribution by the hologram realized by the hologram data becomes the intensity distribution of the emitted light indicated by the target information. The generation of the hologram data using the algorithm itself may be performed in the same manner as in the related art.

The generation unit 13 outputs the generated hologram data. For example, the generation unit 13 transmits the generated hologram data to the control device 40 that is a transmission source of the target information. The control device 40 receives the hologram data. The hologram data is input from the control device 40 to the SLM 31 included in the laser processing machine 20, and is used to realize a hologram for light modulation in the SLM 31.

The generation unit 13 may use information other than the target information for generating hologram data. For example, the data D2 of the image of the emitted light from the SLM 31 imaged by the camera 35 (measurement data of the camera 35) may be used for generating hologram data. The data D2 of the image is transmitted from the control device 40 to the hologram data generation system 10. The generation unit 13 receives and acquires the data D2 of the image.

The generation unit 13 uses the data D2 of the image for correction of the hologram data. For example, in a case of the target information for making the intensities of each of the multipoint beams illustrated in FIG. 5(a) uniform, there is a case where deviation occurs on one side due to influence of aging or the like of the laser light source, the optical element, or the like. In addition, environments such as humidity and temperature also affect the emitted light from the SLM 31. In this case, the measurement data of the camera 35 is fed back to the hologram data generation system 10, and for example, correction is added such that a portion with high intensity is weakened and a portion with low intensity is strengthened, whereby hologram data suitable for the target information can be generated. Furthermore, at this time, for example, in the laser processing machine 20 illustrated in FIG. 2, an optical or mechanical shutter may be provided on an optical path between the mirror 33 and the lens 34, and the shutter may be closed until final hologram data is generated so that the workpiece 50 is not irradiated with light.

In addition, for example, the processing state of the workpiece 50 may be monitored using light interference measurement described in F. Mezzapesa et al., "High-resolution monitoring of the hole depth during ultrafast laser ablation drilling by diode laser self-mixing interferometry", Opt. Lett. 36, 822-824 (2011), and hologram data may be generated based on the measurement information. In addition, the generation unit 13 may also use information other than the above (for example, information regarding hardware of the laser processing machine 20) for generating hologram data. The functions of the hologram data generation system 10 according to the present embodiment have been described above.

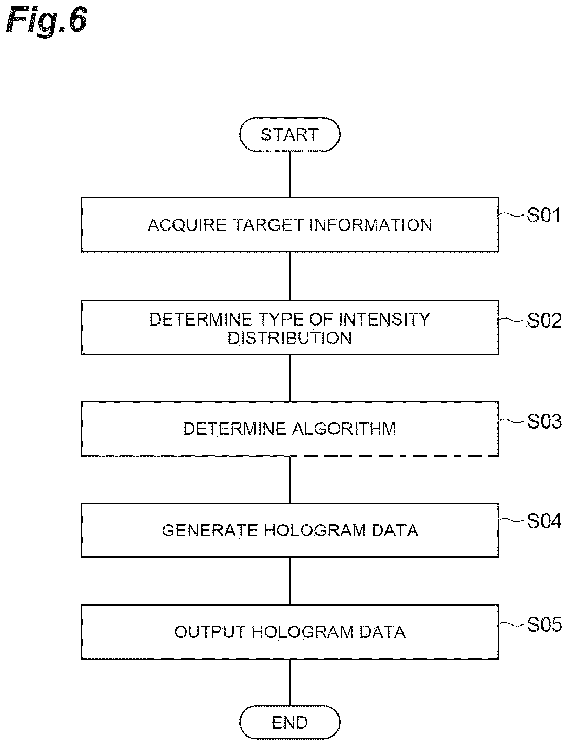

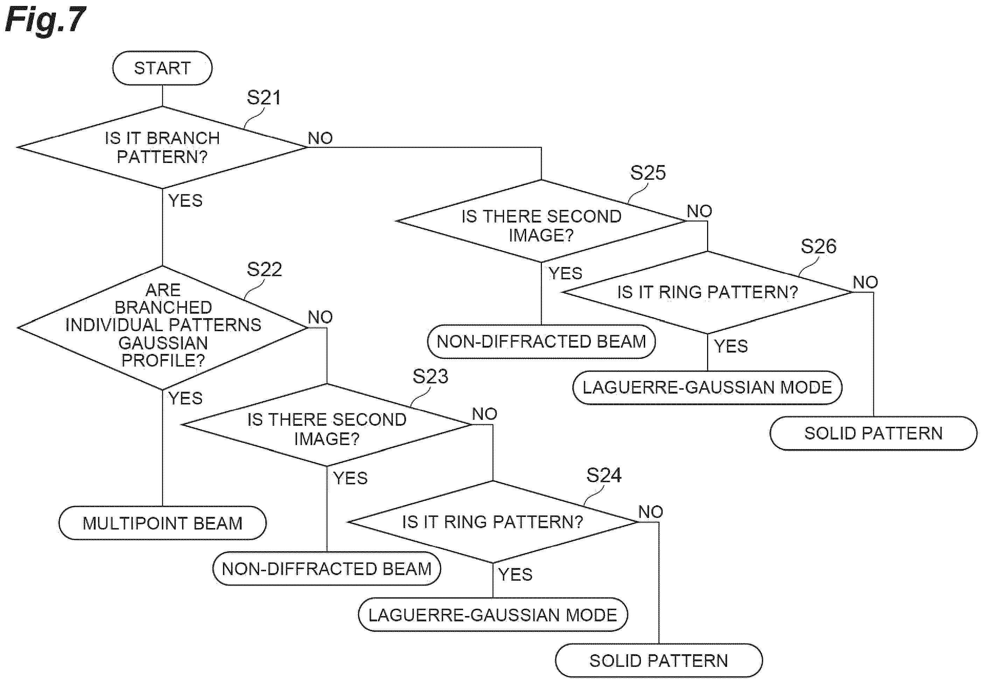

Subsequently, a hologram data generation method which is processing executed by the hologram data generation system 10 according to the present embodiment (operation method performed by the hologram data generation system 10) will be described with reference to the flowcharts of FIGS. 6 and 7.

As illustrated in FIG. 6, in the present processing, first, the acquisition unit 11 acquires target information (S01, acquisition step). The target information is acquired, for example, by receiving the target information transmitted from the control device 40. Subsequently, the determination unit 12 determines a type of the intensity distribution from the intensity distribution indicated by the target information (S02, determination step).

Processing of determining the type of the intensity distribution will be described with reference to the flowchart of FIG. 7. In this processing, first, it is determined whether the intensity distribution indicated by the target information is a branch pattern (S21). When it is determined that the intensity distribution is a branch pattern (YES in S21), subsequently, it is determined whether the branched individual intensity distributions are a Gaussian profile (S22). When it is determined that the branched individual intensity distributions are a Gaussian profile (YES in S22), it is determined that the type of the intensity distribution is a multipoint beam.

When it is determined that the branched individual intensity distributions are not a Gaussian profile (NO in S22), or when it is determined that the intensity distribution is not a branch pattern in S21 (NO in S21), subsequently, it is determined whether an image (second image) of the intensity distribution at z = L is included in the target information (S23 and S25). When it is determined that the target information includes the image (second image) of the intensity distribution at z = L (YES in S23, and YES in S25), it is determined that the type of the intensity distribution is a non-diffracted beam.

When it is determined that the image (second image) of the intensity distribution at z = L is not included in the target information (NO in S23, and NO in S25), subsequently, it is determined whether the position of the emitted light of the intensity distribution is ring-shaped (whether the intensity distribution is a ring pattern) (S24 and S26). When it is determined that the position of the emitted light of the intensity distribution is ring-shaped (intensity distribution is a ring pattern) (YES in S24, and YES in S26), it is determined that the type of the intensity distribution is a Laguerre-Gaussian mode. When it is determined that the position of the emitted light of the intensity distribution is not ring-shaped (intensity distribution is not a ring pattern) (NO in S24, and NO in S26), it is determined that the type of the intensity distribution is a solid pattern. The above is the processing of determining the type of the intensity distribution.

Subsequently, as illustrated in FIG. 6, the determination unit 12 determines an algorithm, which is a generation method used for generating hologram data, according to the type of the intensity distribution (S03, determination step). Subsequently, the generation unit 13 generates hologram data from the target information acquired by the acquisition unit 11 according to the algorithm determined by the determination unit 12 (S04, generation step). The generated hologram data is output from the generation unit 13 (S05). The generated hologram data is transmitted from the generation unit 13 to the control device 40, for example, and is used to realize a hologram in the SLM 31 included in the laser processing machine 20. The above is processing executed by the hologram data generation system 10 according to the present embodiment.

In the present embodiment, hologram data is generated by an appropriate generation method according to a type of an emitted light intensity distribution that is a target of emitted light from a hologram. Therefore, according to the present embodiment, the hologram used in the SLM 31 can be made appropriate.

In addition, as in the above-described embodiment, in the hologram data generation system 10, a type of the intensity distribution may be determined from an intensity distribution indicated by target information, and a generation method used to generate hologram data may be determined according to the determined type. According to this configuration, the generation method can be appropriately and reliably determined. As a result, the hologram used in the SLM 31 can be reliably made appropriate. However, it is not always necessary for the hologram data generation system 10 to determine the type of the intensity distribution. For example, information indicating the type of the intensity distribution indicated by the target information may be acquired together with the target information, and the generation method may be determined using the information.

Furthermore, as described above, the type of the intensity distribution may include at least one of a discrete distribution, a distribution in a traveling direction of emitted light, and an annular distribution. According to this configuration, the type of the intensity distribution for determining the generation method can be made appropriate. As a result, the hologram used in the SLM 31 can be reliably made appropriate.

In the embodiment described above, the algorithm that is the generation method used for generating the hologram data is determined according to the type of the intensity distribution, but the algorithm may be determined according to a data format of the target information to be acquired. For example, in a case where the acquired target information is six-dimensional data of (x, y, z, a, px, py) different from the above-described one, an algorithm corresponding to the case may be used. Among the above six-dimensional data, (x, y, z) are coordinates (positions) of a space for indicating the intensity distribution. z is a coordinate in a light traveling direction, and x and y are coordinates in a plane perpendicular to the direction. a is a value indicating a brightness (signal intensity) at the position of (x, y, z). px and py are values indicating polarization in an x direction and a y direction at the position of (x, y, z).

In a case where the target information is the above-described six-dimensional data, for example, a Gerchberg and Saxton (GS) method described in Optik 35, 235-346 (1972) is used as the algorithm used for generating the hologram data. By determining the algorithm according to the data format of the target information in this manner, the hologram used in the SLM 31 can be made appropriate.

### Reference Signs List

- 10: Hologram data generation system
- 11: Acquisition unit
- 12: Determination unit
- 13: Generation unit
- 20: Laser processing machine
- 21: Laser light source
- 22: Beam shaping optical system
- 23: Lens
- 30: SLM module
- 31: SLM
- 32: Imaging optical system
- 33: Mirror
- 34: Lens
- 35: Camera
- 40: Control device
- 50: Workpiece

## Claims

1. A hologram data generation system for generating hologram data for realizing a hologram used for light modulation in a spatial light modulator (31), the hologram data generation system comprising:
acquisition means (11) for acquiring target information indicating an emitted light intensity distribution that is a target of emitted light from a hologram;
determination means (12) for determining, from a plurality of generation methods prepared in advance, a generation method to be used for generating the hologram data according to a type of intensity distribution indicated by the target information acquired by the acquisition means (11); and
generation means (13) for generating the hologram data from the target information acquired by the acquisition means (11) by the generation method determined by the determination means (12).

2. The hologram data generation system according to claim 1, wherein the determination means (12) determines the type of the intensity distribution from the intensity distribution indicated by the target information acquired by the acquisition means (11), and determines the generation method to be used for generating the hologram data according to the determined type.

3. The hologram data generation system according to claim 1 or 2, wherein the type of the intensity distribution includes at least one of a discrete distribution, a distribution in a traveling direction of emitted light, and an annular distribution.

4. A hologram data generation method that is an operation method of a hologram data generation system for generating hologram data for realizing a hologram used for light modulation in a spatial light modulator (31), the hologram data generation method comprising:
an acquisition step of acquiring target information indicating an emitted light intensity distribution that is a target of emitted light from a hologram;
a determination step of determining, from a plurality of generation methods prepared in advance, a generation method to be used for generating the hologram data according to a type of intensity distribution indicated by the target information acquired in the acquisition step; and
a generation step of generating the hologram data from the target information acquired in the acquisition step by the generation method determined in the determination step.

## Patentansprüche

1. Erzeugungssystem für Hologramm-Daten zum Erzeugen von Hologramm-Daten zur Realisierung eines Hologramms, das für Lichtmodulation in einem räumlichen Lichtmodulator (31) eingesetzt wird, wobei das Erzeugungssystem für Hologramm-Daten umfasst:
eine Erfassungseinrichtung (11) zum Erfassen von Zielinformationen, die eine Emissionslicht-Intensitätsverteilung von einem Hologramm emittierten Lichts angeben, auf die abgezielt wird;
eine Bestimmungseinrichtung (12) zum Bestimmen eines zum Erzeugen der Hologramm-Daten einzusetzenden Erzeugungsverfahrens aus einer Vielzahl im Voraus erstellter Erzeugungsverfahren entsprechend einem Typ von Intensitätsverteilung, die von den durch die Erfassungseinrichtung (11) erfassten Zielinformationen angezeigt wird; und
eine Erzeugungseinrichtung (13) zum Erzeugen der Hologramm-Daten auf Basis der durch die Erfassungseinrichtung (11) erfassten Ziel Informationen mit dem durch die Bestimmungseinrichtung (12) bestimmten Erzeugungsverfahren.

2. Erzeugungssystem für Hologramm-Daten nach Anspruch 1, wobei die Bestimmungseinrichtung (12) den Typ der Intensitätsverteilung auf Basis der von den durch die Erfassungseinrichtung (11) erfassten Zielinformationen angezeigten Intensitätsverteilung bestimmt und das zum Erzeugen der Hologramm-Daten einzusetzende Bilderzeugungsverfahren entsprechend dem bestimmten Typ bestimmt.

3. Erzeugungssystem für Hologramm-Daten nach Anspruch 1 oder 2, wobei der Typ der Intensitätsverteilung wenigstens eine Verteilung von einer diskreten Verteilung, einer Verteilung in einer Ausbreitungsrichtung von emittiertem Licht und einer ringförmigen Verteilung einschließt.

4. Erzeugungsverfahren für Hologramm-Daten, das ein Arbeitsverfahren eines Erzeugungssystems für Hologramm-Daten zum Erzeugen von Hologramm-Daten zur Realisierung eines Hologramms ist, das für Lichtmodulation in einem räumlichen Lichtmodulator (31) eingesetzt wird, wobei das Erzeugungsverfahren für Hologramm-Daten umfasst:
einen Erfassungsschritt zum Erfassen von Zielinformationen, die eine Emissionslicht-Intensitätsverteilung von einem Hologramm emittierten Lichts angeben, auf die abgezielt wird;
einen Bestimmungsschritt zum Bestimmen eines zum Erzeugen der Hologramm-Daten einzusetzenden Erzeugungsverfahrens aus einer Vielzahl im Voraus erstellter Erzeugungsverfahren entsprechend einem Typ von Intensitätsverteilung, die von den in dem Erfassungsschritt erfassten Zielinformationen angezeigt wird; und
einen Erzeugungsschritt zum Erzeugen der Hologramm-Daten auf Basis der in dem Erfassungsschritt erfassten Zielinformationen mit dem in dem Bestimmungsschritt bestimmten Erzeugungsverfahren.

## Revendications

1. Système de génération de données d'hologramme permettant de générer des données d'hologramme pour réaliser un hologramme utilisé pour moduler de la lumière dans un modulateur spatial de lumière (31), le système de génération de données d'hologramme comprenant :
un moyen d'acquisition (11) permettant d'acquérir des informations cibles indiquant une distribution d'intensité lumineuse émise qui est une cible d'une lumière émise par un hologramme ;
un moyen de détermination (12) permettant de déterminer, à partir d'une pluralité de procédés de génération préparés à l'avance, un procédé de génération à utiliser pour générer les données d'hologramme selon un type de distribution d'intensité indiqué par les informations cibles acquises par le moyen d'acquisition (11) ; et
un moyen de génération (13) permettant de générer les données d'hologramme à partir des informations cibles acquises par le moyen d'acquisition (11) par le procédé de génération déterminé par le moyen de détermination (12).

2. Système de génération de données d'hologramme selon la revendication 1, dans lequel le moyen de détermination (12) détermine le type de distribution d'intensité à partir de la distribution d'intensité indiquée par les informations cibles acquises par le moyen d'acquisition (11), et détermine le procédé de génération à utiliser pour générer les données d'hologramme selon le type déterminé.

3. Système de génération de données d'hologramme selon la revendication 1 ou 2, dans lequel le type de distribution d'intensité comporte l'une au moins parmi une distribution discrète, une distribution dans une direction de déplacement de la lumière émise et une distribution annulaire.

4. Procédé de génération de données d'hologramme qui est un procédé de fonctionnement d'un système de génération d'hologramme permettant de générer des données d'hologramme pour réaliser un hologramme utilisé pour moduler de la lumière dans un modulateur spatial de lumière (31), le procédé de génération de données d'hologramme comprenant :
une étape d'acquisition consistant à acquérir des informations cibles indiquant une distribution d'intensité lumineuse émise qui est une cible d'une lumière émise par un hologramme ;
une étape de détermination consistant à déterminer, à partir d'une pluralité de procédés de génération préparés à l'avance, un procédé de génération à utiliser pour générer les données d'hologramme selon un type de distribution d'intensité indiqué par les informations cibles acquises lors de l'étape d'acquisition ; et
une étape de génération consistant à générer les données d'hologramme à partir des informations cibles acquises lors de l'étape d'acquisition par le procédé de génération déterminé lors de l'étape de détermination.
